# EUROPEAN PATENT SPECIFICATION

(11) **EP 4 479 643 B1**
(45) Date of publication and mention of the grant of the patent: **01.04.2026**
(21) Application number: 23710801.4
(22) Date of filing: 14.02.2023
(51) Int. Cl.: F03B 13/20, F03B 13/18

(54) **DEVICE AND METHOD FOR PRODUCING ELECTRICAL ENERGY FROM WAVE MOTION**
VORRICHTUNG UND VERFAHREN ZUR ERZEUGUNG ELEKTRISCHER ENERGIE AUS WELLENBEWEGUNG
DISPOSITIF ET PROCÉDÉ DE PRODUCTION D'ÉNERGIE ÉLECTRIQUE À PARTIR D'UN MOUVEMENT ONDULATOIRE

(30) Priority: 15.02.2022 IT 202200002747
(43) Date of publication of application: 25.12.2024
(73) Proprietor: Alma Mater Studiorum Universita di Bologna, 40126 Bologna (IT)
(72) Inventor: ZANUTTIGH, Barbara, 40123 Bologna (IT); DALLAVALLE, Elisa, 40135 Bologna (IT); FORMENTIN, Sara Mizar, 40123 Bologna (IT)
(74) Representative: Petraz, Davide Luigi
(86) International application number: PCT/IT2023/050045
(87) International publication number: WO 2023/157035

(56) References cited:
- CN-B- 110 219 766
- GB-A- 2 104 974
- US-A- 4 843 249

## Description

### FIELD OF THE INVENTION

The present invention concerns a device for producing electrical energy from wave motion, that is, from the kinetic energy of waves.

### BACKGROUND OF THE INVENTION

Devices are known, for producing electrical energy from wave motion and which can be divided into the following three categories: fixed devices, floating devices and underwater devices.

Fixed devices are typically positioned on the shore, for example attached to cement or concrete structures and can produce electrical energy only from the motion of the waves that reach the shore, which are less energetic than the waves that develop offshore, due to their breaking process. Therefore, said fixed devices can only be applied in highly energetic seas and cannot be applied effectively in seas that have a mild climate and in which the waves have a low kinetic energy.

Moreover, another disadvantage of fixed devices is that the structure to which they are attached can have a great visual and acoustic impact (cases of resonance of the devices with turbines) so that it may not be socially appreciated and accepted by the communities that frequent the place where they are installed.

Floating devices, on the other hand, are designed to be installed in the open sea where wave motion is typically more energetic than onshore. An example of a floating device known in the state of the art is described by the Chinese patent document CN 110219766 B. Most existing floating devices have sizes that can even reach tens of meters, and their moving mechanical parts have very high inertias, due to which said floating devices are also applicable only in very energetic seas, and cannot be used efficiently in low energy seas, such as those seas that have a mild climate.

Underwater devices, on the other hand, are designed to be installed on the seabed, and require foundations that impact the seabed in a more significant way than the anchors needed to keep floating devices in position. These underwater devices are typically unidirectional, that is, they are designed to produce energy only from waves or underwater currents coming from one direction and are therefore energy inefficient and suitable for installation only in those seas where the waves come from one direction only. Lastly, the installation of this type of device requires a high initial investment and high maintenance costs which, in some cases, make the use of these underwater devices economically disadvantageous.

Many of the existing devices, both floating and underwater, have a high number of exposed mechanical components, subject to wear and tear, and which risk dispersing debris into the sea, with environmental consequences as well.

Most of these devices are typically built with metal materials, which need to be protected with toxic paints in order to prevent "marine bio-fouling" (the colonization of surfaces by marine organisms) and therefore to keep their operation unchanged.

There is therefore a need to perfect a device and method for producing electrical energy from wave motion which can overcome the disadvantages of the state of the art.

In particular, one purpose of the present invention is to provide a device for producing electrical energy from wave motion which can also be used in low-energy seas which usually have a mild climate.

Another purpose of the present invention is to provide a device for efficiently producing electrical energy from wave motion even when the waves come from different directions.

Another purpose of the present invention is to provide a device for producing electrical energy from wave motion which is simple to assemble and maintain.

Another purpose of the present invention is to provide a device for producing electrical energy from wave motion which is made of eco-compatible materials, which do not require toxic paints, and which can guarantee a longer life and therefore reduce the frequency of ordinary maintenance.

Another purpose of the present invention is to provide a device for producing electrical energy from wave motion which is made with a modular geometry, which allows the device to be easily disposed to form farms, to be usable in different conditions of energy demand.

Another purpose of the present invention is to provide a device for producing electrical energy from wave motion which has a reduced environmental and visual impact, which is therefore not harmful to the marine environment, and which is also practically invisible from the shore.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, a device has been embodied, according to the present invention, for producing electrical energy from wave motion which comprises a floating structure, a rotating member configured to be hit by a wave and at least partly absorb its kinetic energy, the kinetic energy being converted into electrical energy by a converter member.

In accordance with one aspect of the present invention, the converter member is attached to the floating structure, and the converter member comprises an at least partly hollow roller attached to the converter member in order to rotate with respect to the latter and to the floating structure.

In accordance with one aspect of the present invention, the rotating member is configured to be rotated by the wave and the converter member is configured to convert the kinetic energy generated by the motion of rotation into electrical energy.

In accordance with another aspect of the present invention, the device also comprises a support member attached to the floating structure, and the rotating member is connected to the floating structure both in correspondence with the converter member and also in correspondence with the support member.

In accordance with another aspect of the present invention, the floating structure comprises a plurality of structural elements, which are internally hollow and have a lower density than water, which define between them a central aperture in which the rotating member, the converter member and the support member are disposed.

In accordance with another aspect of the present invention, the floating structure has the shape of a body closed in a loop around the central aperture.

The shape of the floating structure closed around a central aperture is advantageous to increase the stability of the structure itself which, if it were open on at least one side, would be more subject to overturning possibly caused by wave motion.

In accordance with another aspect of the present invention, the floating structure lies on a substantially horizontal plane and the axis around which the rotating member rotates is substantially horizontal.

In accordance with another aspect of the present invention, the device is symmetrical with respect to at least one horizontal plane comprising said axis and to at least one vertical plane comprising said axis.

Moreover, the device is preferably symmetrical also with respect to a vertical plane orthogonal to said axis.

In accordance with another aspect of the present invention, the converter member comprises an elongated element coupled both to a first motion transmission element attached to the rotating member, and also to a second motion transmission element attached to a rotor, which is in turn enveloped by a stator. Moreover, the first motion transmission element is configured to transform a rotation of the rotating member into a translation of the elongated element, and the second motion transmission element is configured to transform a translation of the elongated element into a rotation of the rotor.

In accordance with another aspect of the present invention, the rotor comprises a plurality of permanent magnets and the stator comprises a plurality of electrical coils.

In accordance with another aspect of the present invention, the elongated element is a grub screw with recirculating balls which develops along a longitudinal axis corresponding to the axis around which the rotating member and the rotor rotate.

In accordance with another aspect of the present invention, the device comprises an anchoring member which comprises:
- at least two first ropes having one end configured to be fastened to the seabed and another end attached to the floating structure;
- a buoy and three second ropes having one end configured to be fastened to the seabed and another end attached to the buoy;
- a fourth rope connected to the buoy and to the floating structure.

In accordance with another aspect of the present invention, a unit for producing electrical energy from wave motion comprises a plurality of devices according to the present invention, placed side by side to each other in order to form a row or a plurality of rows aligned to form a matrix of a determined number of rows and columns.

In accordance with another aspect of the present invention, a method to convert wave energy into electrical energy comprises a step of disposing in the water a device comprising a floating structure, a rotating member and a converter member attached to the floating structure, configured to convert the rotation of the rotating member into electrical energy, wherein the floating structure comprises a plurality of structural elements, which are internally hollow and have a lower density than water, which define between them a central aperture in which the rotating member and the converter member are disposed, and wherein the rotating member comprises an at least partly hollow roller attached to the converter member in order to rotate with respect to the latter.

According to one aspect of the present invention, the method also comprises a step which provides to allow the rotating member to be set in free rotation by the waves in order to rotate with respect to the floating structure.

According to another aspect of the present invention, the method comprises a step of stabilizing the position of the device with respect to a seabed by means of an anchoring system such as to allow a free passive realignment of the device with respect to the prevailing direction of origin of the waves.

According to another aspect of the present invention, the method comprises the steps of transforming the rotation of the rotating member into a linear translation of the elongated element and of transforming the linear translation of the elongated element into a rotation of the rotor in order to induce an electric voltage in the stator.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a three-dimensional view of a device for producing electrical energy from wave motion, in accordance with one embodiment of the present invention;
- fig. 2 is a schematic longitudinal section view, according to a vertical section plane containing the axis X, of the device of fig. 1;
- fig. 3 is a lateral view of the device of fig. 1 in a condition of use;
- fig. 4 is a three-dimensional view of a unit for producing electrical energy from wave motion comprising a plurality of devices of fig. 1, in accordance with one embodiment of the present invention;
- fig. 5 is a lateral view of a device for producing electrical energy from wave motion according to an alternative embodiment of the present invention.

It is to be clarified that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

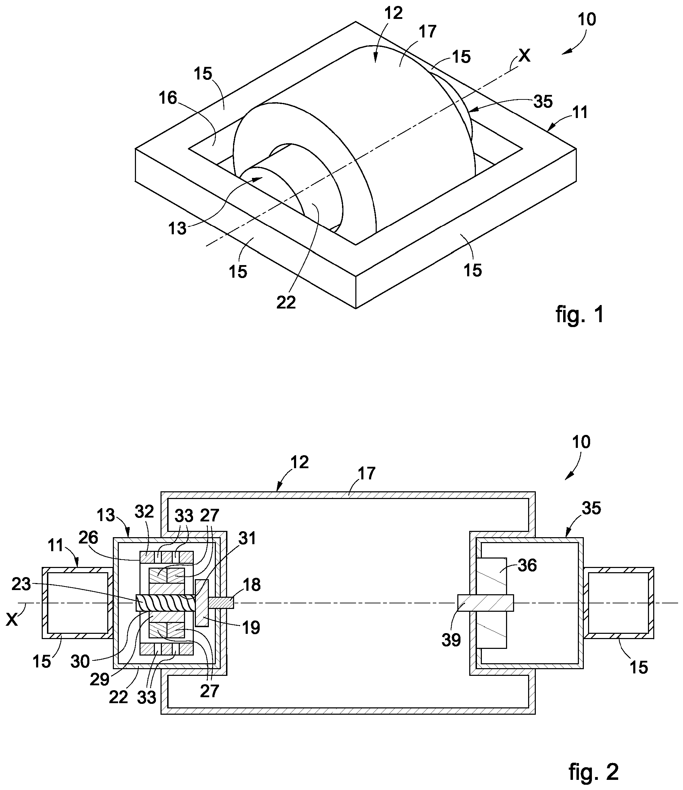

With reference to fig. 1, a device 10 for producing electrical energy from wave motion comprises a floating structure 11 configured to support and keep afloat a rotating member 12 and a converter member 13.

The rotating member 12 is configured to be partly immersed in water and to be rotated with respect to the floating structure 11, and the converter member 13 is configured to convert the motion of rotation of the rotating member 12 into electrical energy.

In the example given here, the floating structure 11 comprises a plurality of internally hollow structural elements 15 disposed facing each other in pairs defining a square having a central aperture 16.

Each structural element 15 has an elongated shape and a square or rectangular section, and it has two ends, each of which is connected to another structural element 15 disposed at an angle of approximately 90°.

In this way, the floating structure 11 has the shape of a body closed in a loop around the central aperture 16. In the example given here, the floating structure 11 has the shape of a square and it is delimited by the four structural elements 15.

In other embodiments, the floating structure 11 can also have different shapes from what has been described above, without thereby departing from the scope of protection of the present invention.

For example, the central structure 11 can have the shape of a circular ring, or any other regular or non-regular polygon.

Both the rotating member 12 and also the converter member 13 are disposed in the central aperture 16 of the floating structure 11.

The rotating member 12 comprises a roller 17 pivoted in order to rotate around a substantially horizontal axis X.

The roller 17 is preferably hollow, so that its inertia is relatively low compared to the inertia of known devices and, therefore, it can also be rotated by the waves present in low energy seas with a mild climate.

The roller 17 can also have a shape other than a cylindrical one, for example it can be provided with a plurality of lateral grooves which promote the transmission of motion from the waves to it.

Attached to the roller 17 is a transmission shaft 18 configured to rotate a first motion transmission element 19 comprising a hole (not shown) having a threaded internal surface (not shown).

In the example given here, the first motion transmission element 19 is disposed inside the container 22; however, in other embodiments, the first motion transmission element 19 can be attached directly to the rotating member.

The converter member 13 is disposed in a container 22 attached to one of the structural elements 15 of the floating structure 11. The container 22 is hermetically closed to guarantee a watertight seal inside it. This allows to protect the delicate electrical/electromechanical components of the converter member 13 from sea water, guaranteeing their correct functionality and avoiding having to replace, prematurely, components that have been damaged or worn out by contact with salt water.

The converter member 13 comprises an elongated element 23 having a first portion inserted in the hole of the first motion transmission element 19.

An example of the converter member 13, which can be installed in the device 10, also comprises a rotor 26, having a plurality of permanent magnets 27, which is integral with a second motion transmission element 29.

The second motion transmission element 29 has a hole 30 with a threaded internal surface 31 in which a second portion of the elongated element 23 is inserted.

The rotor 26 is in turn enveloped with clearance by a stator 32 which is attached to the container 22 and comprises a plurality of electrical coils 33 configured to cooperate with the permanent magnets 27 of the rotor 26.

In this example, the elongated element 23 is a grub screw of the type with recirculating balls, that is, comprising a plurality of support balls which slide in the groove defined between two adjacent threads. These support balls have the purpose of reducing the friction between the elongated element 23 and the motion transmission elements 19 and 29.

The coupling between the elongated element 23 and the two motion transmission elements 19 and 29 allows, firstly, to convert the rotation of the rotating element 12 into a linear translation of the elongated element 23 and, secondly, to convert the translational movement of the elongated element 23 into a rotation of the rotor 26 with respect to the stator 32.

The rotation of the rotor 26, and therefore also of the permanent magnets 27, inside the stator 32, which instead remains fixed, induces an electric voltage in the coils 33 due to the principle of electromagnetic induction.

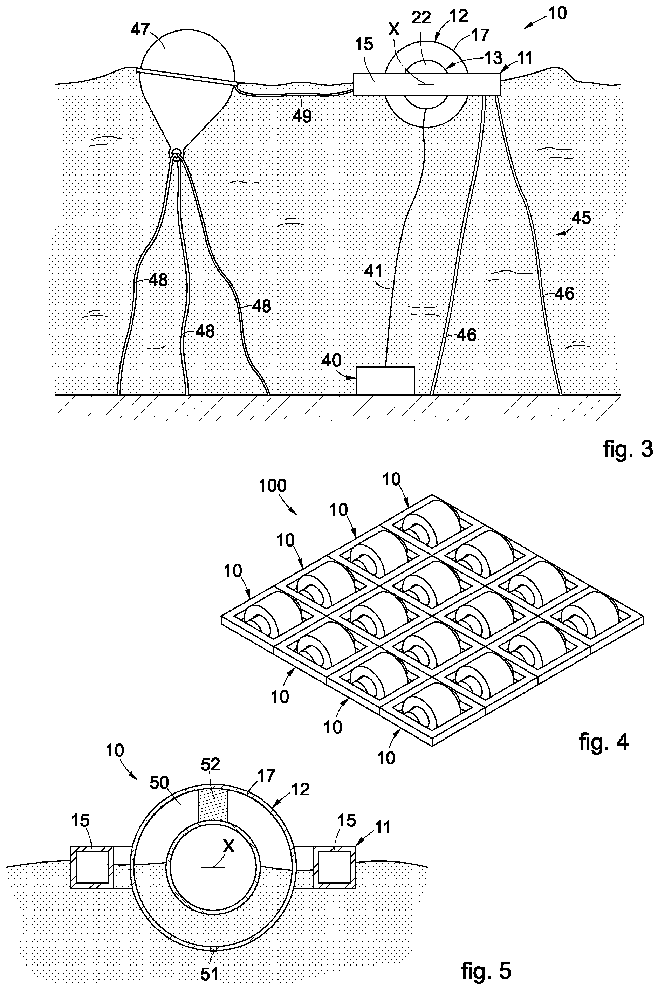

The electrical energy deriving from the electric voltage is then taken from the stator 32 and, as can be seen in fig. 3, is transported to an accumulation station 40 by means of an electric cable 41.

The coupling between the elongated element 23 and the two motion transmission elements 19 and 29 allows to minimize the number of mechanical components in contact with the water, so as to reduce the risk of breakdowns, malfunctions and deterioration thereof.

The device 10 can also comprise additional support elements for the elongated element 23, such as a bearing for example, attached to the container 22.

The device 10 also comprises a support element 35 configured to support the roller 17 and which is attached to the floating structure 11 on the side opposite to that where the container 22 is attached.

In particular, the roller 17 is interposed between the converter member 13 and the support element 35 and it is pivoted, at one end, to the elongated element 23 and, at the other end, to the support element 35.

For example, the support element 35 can comprise a bearing 36 and the roller 17 can comprise a shaft 39 inserted in the bearing 36 to rotate freely with respect to the support element 35.

Preferably, the support element 35 has the same shape as the container 22 and a counterweight (not shown) is disposed inside it so as to stabilize the device 10 and allow it to maintain a substantially horizontal position even when it is immersed in water.

The device 10 of the present invention is preferably symmetrical with respect to both a horizontal plane as well as a vertical plane, both comprising the axis of rotation of the roller 17. Moreover, the device 10 is also symmetrical with respect to a vertical plane orthogonal to the axis X of rotation of the roller 17.

This allows the device 10 to passively and continuously align itself with the main direction of origin of the waves that hit it, so as to maximize its energy efficiency. Furthermore, it makes the construction of the device 10 rather simple and scalable, and it also allows to simplify the maintenance interventions to be performed on it.

The converter member 13 of the device 10 in accordance with the present invention can also be different from what has been described, without thereby departing from the scope of protection of the present invention.

For example, in other embodiments (fig. 5), the roller 17 comprises inside it a hollow space 50, preferably with a toroidal shape, containing air.

Furthermore, in these embodiments, the roller 17 also comprises an aperture 51 to allow water to enter the hollow space 50 in order to partly fill it in correspondence with its lower portion.

The level of the water present in the lower portion of the hollow space 50 varies as a function of the phase of the wave, thus causing a variation in the pressure of the air present in the upper portion of the hollow space 50.

For example, during the crest phase of the wave the air present in the upper portion of the hollow space 50 is compressed, while in the trough phase of the wave it is expanded.

Inside the roller 17 there is also disposed a pneumatic device 52 configured to convert the variation in the pressure of the air present in the hollow space 50 into a mechanical motion.

Moreover, also in this case the roller 17 can rotate slightly around the axis X.

Purely by way of a non-limiting example, the hydraulic or pneumatic device 52 can comprise a double effect piston or a turbine of the Wells type and it is connected to the converter member 13 in order to rotate the rotor 26 and induce an electric voltage in the coils 33 of the stator 32.

The position of the device 10 with respect to the seabed is stabilized by means of an anchoring member 45 which comprises two ropes 46, preferably disposed symmetrically, each of which has one end fastened to the seabed and another end attached to the floating structure 11.

The anchoring member 45 also comprises a buoy 47 and three additional ropes 48, each of which has one end fastened to the seabed and another end attached to the buoy 47.

In addition, the buoy 47 is connected to the floating structure 11 by a fourth rope 49.

Each rope 46 has a length such as to allow a determined freedom of movement of the floating structure 11 in the horizontal plane on which it lies when immersed in the water. Advantageously, this disposition of the ropes does not hinder the passive realignment of the device 10 with respect to the direction of origin of the waves or currents.

In preferred embodiments, at least one of either the floating structure, the container 22, the roller 17 or the support element 35 is made of a recycled or recyclable polymeric material.

In other embodiments, which can be combined with the previous ones, the container 22 is made of steel or other metal material which allows the energy conversion system to be kept watertight.

The present invention also concerns a unit 100 for producing electrical energy from wave motion which comprises a plurality of devices 10 as described above, as visible in fig. 4.

In fact, the conformation of the device 10 is advantageously of the modular type and allows a plurality of the devices 10 to be easily placed side by side.

In the present case, the unit 100 comprises sixteen devices 10 placed side by side to each other so as to form four adjacent rows, each of which comprises four devices 10 placed side by side and attached to each other in correspondence with the respective structural elements 15. It is clear that in other embodiments the unit 100 can comprise a different number of devices 10, being able to comprise a different number of devices on the rows and/or on the columns according to the climate and the specific needs of each installation.

The operation of the device 10 described heretofore comprises the following steps.

When the device 10 is disposed in the water, the impact of the waves against the rotating member 12 rotates the roller 17 and, consequently, also the first motion transmission element 19, around the axis X.

The rotation of the first motion transmission element 19 triggers the translation of the elongated element 23 along the axis X which, in turn, triggers the rotation of the second motion transmission element 29 to which the rotor 26 is attached.

The rotation of the rotor 26 around the axis X induces an electric voltage in the coils 33 of the stator 32 due to the principle of electromagnetic induction.

The electrical energy deriving from the electric voltage is taken from the stator 32 and is transported to an accumulation station 40 by means of the electric cable 41.

It is clear that modifications and/or additions of parts may be made to the device 10 and to the method as described heretofore, without departing from the field and scope of the present invention, as defined by the claims.

It is also clear that, although the present invention has been described with reference to some specific examples, a person of skill in the art will be able to create other equivalent forms of device for producing electrical energy from wave motion, having the characteristics as set forth in the claims and hence all coming within the field of protection defined thereby.

In the following claims, the sole purpose of the references in brackets is to facilitate their reading and they must not be considered as restrictive factors with regard to the field of protection defined by the same claims.

## Claims

1. Device (10) for producing electrical energy from wave motion comprising a floating structure (11), a rotating member (12) configured to be hit by a wave and at least partly absorb its kinetic energy, said kinetic energy being converted into electrical energy by a converter member (13) attached to said floating structure (11) and wherein said rotating member (12) comprises an at least partly hollow roller (17) attached to said converter member (13) in order to rotate with respect to the latter and to said floating structure (11), said device is **characterized in that** said floating structure (11) comprises a plurality of structural elements (15), which are internally hollow and have a lower density than water, which define between them a central aperture (16) in which said rotating member (12) and said converter member (13) are disposed.

2. Device (10) as in claim 1, **characterized in that** said rotating member (12) is configured to be rotated by said wave and said converter member (13) is configured to convert said kinetic energy generated by said motion of rotation into electrical energy.

3. Device (10) as in claim 1 or 2, **characterized in that** it also comprises a support member (35) attached to said floating structure (11) **and in that** said rotating member (12) is connected to said floating structure (11) both in correspondence with said converter member (13) and also in correspondence with said support member (35).

4. Device (10) as in any claim hereinbefore, **characterized in that** said floating structure (11) has the shape of a body closed in a loop around said central aperture (16).

5. Device (10) as in any claim hereinbefore, **characterized in that** said floating structure (11) lies on a substantially horizontal plane **and in that** said rotating member (12) rotates around an axis (X) which is substantially horizontal.

6. Device (10) as in claim 5, **characterized in that** it is symmetrical with respect to at least one horizontal plane comprising said axis (X), to a vertical plane passing through said axis (X) and to a vertical plane orthogonal to the previous one and also passing through said axis (X).

7. Device (10) as in any claim hereinbefore, **characterized in that** said converter member (13) comprises an elongated element (23) coupled both to a first motion transmission element (19) connected to said rotating member (12), and also to a second motion transmission element (29) attached to a rotor (26), which is in turn enveloped by a stator (32), **and in that** said first motion transmission element (19) is configured to transform a rotation of said rotating member (12) into a translation of said elongated element (23) and said second motion transmission element (29) is configured to transform a translation of said elongated element (23) into a rotation of said rotor (26).

8. Device (10) as in claim 7, **characterized in that** said rotor (26) comprises a plurality of permanent magnets (27) and said stator (32) comprises a plurality of electrical coils (33).

9. Device (10) as in claim 7 or 8, **characterized in that** said elongated element (23) is a grub screw with recirculating balls which develops along a longitudinal axis corresponding to said axis (X) around which said rotating member (12) and said rotor (26) rotate.

10. Device (10) as in the previous claims, **characterized in that** it comprises an anchoring member (45) which comprises:
- at least two first ropes (46) having one end configured to be fastened to the seabed and another end attached to said floating structure (11);
- a buoy (47) and three second ropes (48) having one end configured to be fastened to the seabed and another end attached to said buoy (47);
- a fourth rope (49) connected to said buoy (47) and to said floating structure (11).

11. Unit (100) for producing electrical energy from wave motion, **characterized in that** it comprises a plurality of devices (10) as in any claim hereinbefore, side by side with each other to form a row or a plurality of rows aligned to form a matrix of a determined number of rows and columns.

12. Method to convert wave energy into electrical energy, **characterized in that** it comprises a step of disposing in the water a device (10) comprising a floating structure (11), a rotating member (12) and a converter member (13) attached to said floating structure (11) and configured to convert the rotation of said rotating member (12) into electrical energy, wherein said floating structure (11) comprises a plurality of structural elements (15), which are internally hollow and have a lower density than water, which define between them a central aperture (16) in which said rotating member (12) and said converter member (13) are disposed, and wherein said rotating member (12) comprises an at least partly hollow roller (17) attached to said converter member (13) in order to rotate with respect to the latter, **and in that** it comprises a step which provides to allow said rotating member (12) to be set in free rotation by the waves in order to rotate with respect to said floating structure (11).

13. Method as in claim 12, **characterized in that** it comprises a step of stabilizing the position of said device (10) with respect to the seabed by means of an anchoring member (45) such as to allow a free passive realignment of said device (10) with respect to the prevailing direction of origin of the waves.

14. Method as in claim 12 or 13, wherein said converter member (13) comprises an elongated element (23) associated both with said rotating member (12) and also with a rotor (26) enveloped by a stator (32), and **characterized in that** it comprises the steps of transforming the rotation of said rotating member (12) into a linear translation of said elongated element (23) and of transforming the linear translation of said elongated element (23) into a rotation of said rotor (26) in order to induce an electric voltage in said stator (32).

## Patentansprüche

1. Vorrichtung (10) zur Erzeugung von elektrischer Energie aus Wellenbewegung, die eine schwimmende Struktur (11) und ein rotierendes Element (12) aufweist, das ausgebildet ist, um von einer Welle beaufschlagt zu werden und zumindest teilweise deren kinetische Energie zu absorbieren, wobei die kinetische Energie durch ein an der schwimmenden Struktur (11) angebrachtes Umwandlungselement (13) in elektrische Energie umgewandelt wird, und wobei das rotierende Element (12) eine zumindest teilweise hohle Rolle (17) aufweist, die an dem Umwandlungselement (13) angebracht ist, um sich relativ zu diesem und zu der schwimmenden Struktur (11) zu drehen, **dadurch gekennzeichnet, dass** die schwimmende Struktur (11) eine Vielzahl von Strukturelementen (15) aufweist, die innen hohl sind und eine geringere Dichte als Wasser aufweisen und zwischen sich eine zentrale Öffnung (16) definieren, in der das rotierende Element (12) und das Umwandlungselement (13) angeordnet sind.

2. Vorrichtung (10) gemäß Anspruch 1, **dadurch gekennzeichnet, dass** das rotierende Element (12) ausgebildet ist, um von der Welle gedreht zu werden und das Umwandlungselement (13) ausgebildet ist, die durch die Drehbewegung erzeugte kinetische Energie in elektrische Energie umzuwandeln.

3. Vorrichtung (10) gemäß Anspruch 1 oder 2, **dadurch gekennzeichnet, dass** sie ferner ein Trägerelement (35) aufweist, das an der schwimmenden Struktur (11) befestigt ist, und wobei das rotierende Element (12) mit der schwimmenden Struktur (11) verbunden ist, und zwar sowohl in Entsprechung zu dem Umwandlungselement (13) als auch in Entsprechung zu dem Trägerelement (35).

4. Vorrichtung (10) gemäß einem der vorhergehenden Ansprüche, **dadurch gekennzeichnet, dass** die schwimmende Struktur (11) die Form eines Körpers aufweist, der um die zentrale Öffnung (16) herum geschlossen ist.

5. Vorrichtung (10) gemäß einem der vorhergehenden Ansprüche, **dadurch gekennzeichnet, dass** die schwimmende Struktur (11) auf einer im Wesentlichen horizontalen Ebene liegt und dass sich das rotierende Element (12) um eine Achse (X) dreht, die im Wesentlichen horizontal ist.

6. Vorrichtung (10) gemäß Anspruch 5, **dadurch gekennzeichnet, dass** sie bezüglich mindestens einer horizontalen Ebene, die die Achse (X) aufweist, sowie bezüglich einer vertikalen Ebene, die durch die Achse (X) verläuft, sowie bezüglich einer zur vorhergehenden orthogonalen vertikalen Ebene, die ebenfalls durch die Achse (X) verläuft, symmetrisch ist.

7. Vorrichtung (10) gemäß einem der vorhergehenden Ansprüche, **dadurch gekennzeichnet, dass** das Umwandlungselement (13) ein längliches Element (23) aufweist, das sowohl mit einem ersten Bewegungsübertragungselement (19), das mit dem rotierenden Element (12) verbunden ist, als auch mit einem zweiten Bewegungsübertragungselement (29), das an einem Rotor (26) befestigt ist, verbunden ist, wobei der Rotor (26) seinerseits von einem Stator (32) umgeben ist, und dass das erste Bewegungsübertragungselement (19) ausgebildet ist, um eine Drehung des rotierenden Elements (12) in eine Translation des länglichen Elements (23) umzuwandeln, und das zweite Bewegungsübertragungselement (29) ausgebildet ist, um eine Translation des länglichem Element (23) in eine Rotation des Rotors (26) umzuwandeln.

8. Vorrichtung (10) gemäß Anspruch 7, **dadurch gekennzeichnet, dass** der Rotor (26) eine Vielzahl von Permanentmagneten (27) aufweist und der Stator (32) eine Vielzahl von elektrischen Spulen (33) aufweist.

9. Vorrichtung (10) gemäß Anspruch 7 oder 8, **dadurch gekennzeichnet, dass** das längliche Element (23) eine Gewindespindel mit umlaufenden Kugeln ist, die sich entlang einer Längsachse erstreckt, die der Achse (X) entspricht, um die sich das rotierende Element (12) und der Rotor (26) drehen.

10. Vorrichtung (10) gemäß einem der vorhergehenden Ansprüche, **dadurch gekennzeichnet, dass** sie ein Verankerungselement (45) aufweist, das Folgendes aufweist:
- mindestens zwei erste Seile (46), wobei ein Ende ausgebildet ist, um am Meeresboden befestigt zu werden, und ein zweites Ende an der schwimmenden Struktur (11) befestigt ist;
- eine Boje (47) und drei zweite Seile (48), wobei ein Ende ausgebildet ist, um am Meeresboden befestigt zu werden und ein anderes Ende, an der der Boje (47) befestigt ist;
- ein viertes Seil (49), das mit der Boje (47) und mit der schwimmenden Struktur (11) verbunden ist.

11. Einheit (100) zur Erzeugung elektrischer Energie aus Wellenbewegung, **dadurch gekennzeichnet, dass** sie eine Vielzahl von Vorrichtungen (10) gemäß einem der vorhergehenden Ansprüche aufweist, die nebeneinander angeordnet sind, um eine Reihe zu bilden, oder eine Vielzahl von Reihen, die ausgerichtet sind, um eine Matrix mit einer bestimmten Anzahl von Reihen und Spalten zu bilden.

12. Verfahren zur Umwandlung von Wellenenergie in elektrische Energie, **dadurch gekennzeichnet, dass** es einen Schritt aufweist, bei dem in dem Wasser eine Vorrichtung (10) angeordnet wird, die eine schwimmende Struktur (11), ein rotierendes Element (12) und ein Umwandlungselement (13) aufweist, das an der schwimmenden Struktur (11) befestigt ist und dazu ausgebildet ist, die Drehung des rotierenden Elements (12) in elektrische Energie umzuwandeln, und wobei die schwimmende Struktur (11) eine Vielzahl von Strukturelementen (15) aufweist, die innen hohl sind und eine geringere Dichte als Wasser haben und zwischen sich eine zentrale Öffnung (16) definieren, in der das rotierende Element (12) und das Umwandlungselement (13) angeordnet sind, und wobei das rotierende Element (12) eine zumindest teilweise hohle Rolle (17) aufweist, die an dem Umwandlungselement (13) befestigt ist, um sich relativ zu diesem zu drehen, und dass es einen Schritt aufweist, der es vorsieht, dem rotierenden Element (12) durch die Wellen eine freie Drehung zu ermöglichen, um sich relativ zur schwimmenden Struktur (11) zu drehen.

13. Verfahren gemäß Anspruch 12, **dadurch gekennzeichnet, dass** es einen Schritt aufweist, bei dem die Position der Vorrichtung (10) mittels eines Verankerungselements (45) in Bezug auf den Meeresboden stabilisiert wird, sodass eine freie passive Neuausrichtung der Vorrichtung (10) in Bezug auf die vorherrschende Herkunftsrichtung der Wellen ermöglicht wird.

14. Verfahren gemäß Anspruch 12 oder 13, wobei das Umwandlungselement (13) ein längliches Element (23) aufweist, das sowohl dem rotierenden Element (12) als auch einem Rotor (26) zugeordnet ist, der von einem Stator (32) umgeben ist, **dadurch gekennzeichnet, dass** es die folgenden Schritte aufweist: die Drehung des rotierenden Elements (12) in eine lineare Translation des länglichen Elements (23) umzuwandeln, und die lineare Translation des länglichen Elements (23) in eine Drehung des Rotors (26) umzuwandeln, um in dem Stator (32) eine elektrische Spannung zu induzieren.

## Revendications

1. Dispositif (10) pour produire de l'énergie électrique à partir du mouvement des vagues comprenant une structure flottante (11), un élément rotatif (12) configuré pour être frappé par une vague et absorber au moins partiellement son énergie cinétique, ladite énergie cinétique étant convertie en énergie électrique par un élément convertisseur (13) fixé à ladite structure flottante (11) et dans lequel ledit élément rotatif (12) comprend un rouleau au moins partiellement creux (17) fixé audit élément convertisseur (13) afin de tourner par rapport à ce dernier et à ladite structure flottante (11), ledit dispositif est **caractérisé en ce que** ladite structure flottante (11) comprend une pluralité d'éléments structurels (15), qui sont creux à l'intérieur et ont une densité inférieure à l'eau, qui définissent entre eux une ouverture centrale (16) dans laquelle ledit élément rotatif (12) et ledit élément convertisseur (13) sont disposés.

2. Dispositif (10) selon la revendication 1, **caractérisé en ce que** ledit élément rotatif (12) est configuré pour être mis en rotation par ladite onde et ledit élément convertisseur (13) est configuré pour convertir ladite énergie cinétique générée par ledit mouvement de rotation en énergie électrique.

3. Dispositif (10) selon la revendication 1 ou 2, **caractérisé en ce qu'**il comprend également un élément de support (35) fixé à ladite structure flottante (11) **et en ce que** ledit élément rotatif (12) est relié à ladite structure flottante (11) à la fois en correspondance avec ledit élément convertisseur (13) et également en correspondance avec ledit élément de support (35).

4. Dispositif (10) selon l'une quelconque des revendications précédentes, **caractérisé en ce que** ladite structure flottante (11) a la forme d'un corps fermé en boucle autour de ladite ouverture centrale (16).

5. Dispositif (10) selon l'une quelconque des revendications précédentes, **caractérisé en ce que** ladite structure flottante (11) se trouve sur un plan sensiblement horizontal **et en ce que** ledit élément rotatif (12) tourne autour d'un axe (X) qui est sensiblement horizontal.

6. Dispositif (10) selon la revendication 5, **caractérisé en ce qu'**il est symétrique par rapport à au moins un plan horizontal comprenant ledit axe (X), à un plan vertical passant par ledit axe (X) et à un plan vertical orthogonal au précédent et passant également par ledit axe (X).

7. Dispositif (10) selon l'une quelconque des revendications précédentes, **caractérisé en ce que** ledit élément convertisseur (13) comprend un élément allongé (23) couplé à la fois à un premier élément de transmission de mouvement (19) connecté audit élément rotatif (12), et également à un second élément de transmission de mouvement (29) fixé à un rotor (26), qui est à son tour enveloppé par un stator (32), **et en ce que** ledit premier élément de transmission de mouvement (19) est configuré pour transformer une rotation dudit élément rotatif (12) en une translation dudit élément allongé (23) et ledit second élément de transmission de mouvement (29) est configuré pour transformer une translation dudit élément allongé (23) en une rotation dudit rotor (26).

8. Dispositif (10) selon la revendication 7, **caractérisé en ce que** ledit rotor (26) comprend une pluralité d'aimants permanents (27) et ledit stator (32) comprend une pluralité de bobines électriques (33).

9. Dispositif (10) selon la revendication 7 ou 8, **caractérisé en ce que** ledit élément allongé (23) est une vis sans tête à billes de recirculation qui se développe le long d'un axe longitudinal correspondant audit axe (X) autour duquel tournent ledit élément rotatif (12) et ledit rotor (26).

10. Dispositif (10) selon les revendications précédentes, **caractérisé en ce qu'**il comprend un élément d'ancrage (45) qui comprend :
- au moins deux premières cordes (46) ayant une extrémité configurée pour être fixée au fond marin et une autre extrémité fixée à ladite structure flottante (11) ;
- une bouée (47) et trois deuxièmes cordes (48) ayant une extrémité configurée pour être fixée au fond marin et une autre extrémité fixée à ladite bouée (47) ;
- une quatrième corde (49) reliée à ladite bouée (47) et à ladite structure flottante (11).

11. Unité (100) pour produire de l'énergie électrique à partir du mouvement des vagues, **caractérisée en ce qu'**elle comprend une pluralité de dispositifs (10) selon l'une quelconque des revendications précédentes, côte à côte pour former une rangée ou une pluralité de rangées alignées pour former une matrice d'un nombre déterminé de rangées et de colonnes.

12. Procédé de conversion de l'énergie des vagues en énergie électrique, **caractérisé en ce qu'**il comprend une étape consistant à disposer dans l'eau un dispositif (10) comprenant une structure flottante (11), un élément rotatif (12) et un élément convertisseur (13) fixé à ladite structure flottante (11) et configuré pour convertir la rotation dudit élément rotatif (12) en énergie électrique, dans lequel ladite structure flottante (11) comprend une pluralité d'éléments structurels (15), qui sont creux à l'intérieur et ont une densité inférieure à celle de l'eau, qui définissent entre eux une ouverture centrale (16) dans laquelle ledit élément rotatif (12) et ledit élément convertisseur (13) sont disposés, et dans lequel ledit élément rotatif (12) comprend un rouleau au moins partiellement creux (17) fixé audit élément convertisseur (13) afin de tourner par rapport à ce dernier, **et en ce qu'**il comprend une étape qui prévoit de permettre audit élément rotatif (12) d'être mis en rotation libre par les vagues afin de tourner par rapport à ladite structure flottante (11).

13. Procédé selon la revendication 12, **caractérisé en ce qu'**il comprend une étape de stabilisation de la position dudit dispositif (10) par rapport au fond marin au moyen d'un élément d'ancrage (45) de manière à permettre un réalignement passif libre dudit dispositif (10) par rapport à la direction d'origine dominante des vagues.

14. Procédé selon la revendication 12 ou 13, dans lequel ledit élément convertisseur (13) comprend un élément allongé (23) associé à la fois audit élément rotatif (12) et également à un rotor (26) enveloppé par un stator (32), et **caractérisé en ce qu'**il comprend les étapes consistant à transformer la rotation dudit élément rotatif (12) en une translation linéaire dudit élément allongé (23) et à transformer la translation linéaire dudit élément allongé (23) en une rotation dudit rotor (26) afin d'induire une tension électrique dans ledit stator (32).
